# EUROPÄISCHE PATENTANMELDUNG

(11) **EP 2 161 117 A2**
(43) Veröffentlichungstag der Anmeldung: **10.03.2010**
(21) Anmeldenummer: 09011316.8
(22) Anmeldetag: 04.09.2009
(51) Int. Cl.: B29C 45/27, B29C 33/00

(54) **Verteiler für einen Heiss- oder Kaltkanal**

(30) Priorität: 04.09.2008 DE 102008045701
(71) Anmelder: Günther Heisskanaltechnik GmbH, 35066 Frankenberg (DE)
(72) Erfinder: Günther, Herbert, 35108 Allendorf (DE)
(74) Vertreter: Buchhold, Jürgen

(57) **Zusammenfassung**

Bei einem Verteiler 20 für einen Heiß- oder Kaltkanal 10, mit einer Verteilerplatte 201, die einen Hauptzuführkanal 24 für eine fließfähige Masse aufweist und in der ein Verteilerkanalsystem 40 mit Verteilerkanälen 41, 42, 43 ausgebildet ist, das über Düsenzuführkanäle 26 mit Strömungskanälen 32 von an der Verteilerplatte 201 angeschlossenen Spritzgießdüsen 30 strömungsverbunden ist, sind innerhalb der Verteilerplatte 201 Verteilerzuführkanäle 27, 271, 272 ausgebildet. Dabei ist jeder Verteilerkanal 41, 42, 43 mit dem Hauptzuführkanal 24 und/oder mindestens einem Verteilerzuführkanal 27, 271, 272 strömungsverbunden, wobei jeder Verteilerkanal 41, 42, 43 in mindestens einen Verteilerzuführkanal 27, 271, 272 und/oder in mindestens einen Düsenzuführkanal 26 mündet und wobei jeder Verteilerzuführkanal 27, 271, 272 in einen weiteren Verteilerkanal 41, 42, 43 und jeder Düsenzuführkanal 26 in den Strömungskanal 32 einer jeweils zugeordneten Spritzgießdüse 30 mündet. Die Verteilerkanäle 41, 42, 43, die Verteilerzuführkanäle 27, 271, 272 und/oder die Düsenzuführkanäle 26 sind derart bemessen, dass das Verteilerkanalsystem 40 balanciert ist. Dabei können die Düsenzuführkanäle 26 in einer (n × m)-Matrix angeordnet sein mit n = m oder n ≠ m und n ≥ 3. Die Verteilerkanäle 41, 42 43 können in einer Ebene ausgebildet und horizontal ausgerichtet sein. Die Verteilerzuführkanäle 27, 271, 272, die Düsenzuführkanäle 26 und der Hauptzuführkanal 24 können vertikal ausgerichtet sein. Der Hauptzuführkanal 24 ist derart angeordnet, dass keiner der Düsenzuführkanäle 26 in direkter Linie unterhalb des Hauptzuführkanals 24 angeordnet ist.

## Beschreibung

Die Erfindung betrifft einen Verteiler für einen Heiß- oder Kaltkanal gemäß dem Oberbegriff von Anspruch 1 sowie einen Heiß- oder Kaltkanal gemäß Anspruch 23.

Verteiler sind allgemein bekannt. Sie werden in Spritzgießwerkzeugen eingesetzt, um eine fließfähige Masse bei einer vorgebbaren Temperatur unter hohem Druck einem trennbaren Werkzeugblock (Formnest) zuzuführen. An dem Verteiler oder der Verteilerplatte sind meist eine oder mehrere Spritzgießdüsen angeschlossen, die mit einem Schmelzekanal in dem jeweils zugeordneten Formnest enden. In dem Verteiler sind Verteilerkanäle eingebracht, die über einen Hauptzuführkanal mit einer Maschinendüse und über Düsenaustrittsöffnungen mit den Spritzgießdüsen strömungsverbunden sind.

In zahlreichen Anwendungsbereichen ist es erforderlich, separate Kavitäten gleichzeitig oder kompliziertere Bauteile mehrfach anzuspritzen. Hierzu werden die Düsen in definierten Anordnungen zueinander am Verteiler montiert. Wichtig hierbei ist, dass alle Düsenzuführkanäle gleichzeitig und unter gleichem Druck exakt die gleiche Menge an fließfähiger Masse erhalten, damit alle Bauteile gleichmäßig ausgebildet werden. Bei der Herstellung des Verteilerblockes ist es daher wichtig, dass das System balanciert wird.

Hinlänglich bekannt sind natürlich balancierte Verteilersysteme. Hier haben alle Verteilerkanäle die gleiche Länge und den gleichen Durchmesser, so dass alle Düsenaustrittsöffnungen mit der gleichen Menge Material versorgt werden. Von Nachteil ist jedoch, dass nur geradzahlige symmetrische oder bestimmte sternförmige Düsenanordnungen realisiert werden können. Ein limitierender Faktor ist außerdem die Gesamtanzahl von Düsenzuführkanälen, weil die unter dem Verteiler angeordneten Düsen einen gewissen Raum benötigen. Dadurch können die Düsenzuführkanäle nicht beliebig dicht angeordnet werden. Sternförmige Anordnungen mit vielen Düsen haben daher einen entsprechend großen Radius. Der in der Mitte des Sterns liegende Raum ist relativ groß und nicht nutzbar.

Für komplexere und/oder relativ dichte Düseanordnungen ist es bekannt, zusätzliche (Unter-)Verteilerplatten einzusetzen, welche ihrerseits natürlich balanciert sind und über eine zentrale Hauptverteilerplatte versorgt werden. Dies hat jedoch den Nachteil, dass der Heiß- oder Kaltkanal einen nicht unerheblichen Bauraum einnimmt. Überdies ist es unerlässlich alle Ebenen des aus den Verteilerplatten gebildeten Verteilerblocks zu beheizen, damit die Schmelze eine gleichmäßige Temperatur bis zur Düse behält. Dies ist sehr aufwändig und damit teuer.

Daneben ist es bekannt, Verteilersysteme durch Anpassung der Kanaldurchmesser und Kanallängen zu balancieren. Die Funktionsfähigkeit eines solchen numerisch balancierten Systems ist jedoch in hohem Maße von der speziellen Betriebstemperatur und den stoffspezifischen Eigenschaften der zu verarbeitenden Schmelze abhängig. Besonders bei komplexen Düsenanordnungen sind die Einsatzmöglichkeiten solcher Verteiler daher beschränkt.

Aufgabe der Erfindung ist es, diese und weitere Nachteile zu überwinden und einen verbesserten Verteiler für einen Heiß- oder Kaltkanal bereitzustellen, der mit einfachen Mitteln kostengünstig aufgebaut ist und einen dauerhaft zuverlässigen Betrieb ermöglicht. Insbesondere soll ein Verteiler geschaffen werden, der komplexe Mehrfach-Düsenanordnungen ermöglicht und dennoch wenig Bauraum in Anspruch nimmt. Die einzelnen Düsen sollen ferner unter Ausnutzung der gesamten Verteilerfläche auf engem Raum möglichst dicht nebeneinander angeordnet sein.

Hauptmerkmale der Erfindung sind im kennzeichnenden Teil von Anspruch 1 und im nebengeordneten Anspruch 25 angegeben. Ausgestaltungen sind Gegenstand der Ansprüche 2 bis 24.

Bei einem Verteiler für einen Heiß- oder Kaltkanal, mit einer Verteilerplatte, die einen Hauptzuführkanal für eine fließfähige Masse aufweist und in der ein Verteilerkanalsystem mit Verteilerkanälen ausgebildet ist, das über Düsenzuführkanäle mit den Strömungskanälen von an der Verteilerplatte angeschlossenen Spritzgießdüsen strömungsverbunden ist, sieht die Erfindung vor, dass innerhalb der Verteilerplatte Verteilerzuführkanäle ausgebildet sind, wobei jeder Verteilerkanal mit dem Hauptzuführkanal oder einem Verteilerzuführkanal strömungsverbunden ist, wobei jeder Verteilerkanal in mindestens einen Verteilerzuführkanal und/oder in mindestens einen Düsenzuführkanal mündet, und wobei jeder Verteilerzuführkanal in einen weiteren Verteilerkanal und jeder Düsenzuführkanal in den Strömungskanal einer jeweils zugeordneten Spritzgießdüse mündet, und dass die Verteilerkanäle, die Verteilerzuführkanäle und/oder die Düsenzuführkanäle derart bemessen sind, dass das Verteilerkanalsystem balanciert ist.

Mit dieser erfindungsgemäßen Ausgestaltung eines Verteilers oder einer Verteilerplatte ist es möglich, Spritzgießdüsen auf relativ engem Raum in komplexer Anordnung zu positionieren, wobei nahezu die gesamte Verteilerfläche genutzt werden kann. Die von dem Hauptzuführkanal und den Verteilerkanälen ausgehenden Verteilerkanäle verteilen die zu verarbeitende Spritzgießmasse rasch und zuverlässig auf sämtliche Düsenzuführkanäle, wobei das gesamte System balanciert ausgebildet ist. Das einfache und klar strukturierte Verteilerkanalsystem ermöglicht ferner eine rasche und kostengünstige Fertigung des Verteilers bzw. der Verteilerplatte.

Eine besonders vorteilhafte Ausführungsform der Erfindung sieht dabei vor, dass die Düsenzuführkanäle in einer n × m-Matrix angeordnet sind, wobei n = m oder n ≠ m ist. Dabei kann insbesondere n ≥ 3 sein. Mit einem solchen erfindungsgemäßen Heiß- oder Kaltkanal können beispielsweise neun Düsen und somit neun Formnester gleichzeitig bedient werden, wobei die Düsen in einer 3x3-Anordung über der Verteilerfläche verteilt liegen. Jeweils in einer Richtung benachbarte Düsen bzw. Formnester haben bevorzugt den gleichen Abstand zueinander. Die Düsen bzw. Formnester können außerdem sehr dicht angeordnet werden, wobei der limitierende Faktor der durch die Düse beanspruchte Raum ist. Die Nestabstände können mithin auf ein Minimum reduziert werden. Ungenutzte Räume sind weitestgehend eliminiert.

Ein weiterer Vorteil der erfindungsgemäßen Lösung besteht darin, dass Heißkanäle, die einen solchen Verteiler aufweisen, eine rechteckige bis vollkommen quadratische Grundfläche haben und daher sehr einfach zu größeren Anordnungen gruppiert werden können. Auch eine regelmäßige dreidimensionale Anordnung mehrerer Heißkanäle ist dadurch leicht möglich. So können beispielsweise kugelförmige Bauformen zuverlässig und problemlos hergestellt werden, insbesondere, wenn diese aus geometrischen Gründen eine große Anzahl von Düsen erfordert, die einem Vielfachen von neun entspricht.

Bei einem erfindungsgemäßen Verteiler können beispielsweise alle Verteilerkanäle in einer Ebene ausgebildet sein. Dies hat den Vorteil, dass die Verteilerplatte sehr flach gefertigt werden kann.

Man kann das Verteilerkanalsystem aber auch über mindestens zwei Ebenen erstrecken, wobei in jeder Ebene Verteilerkanäle ausgebildet sind und wobei die Verteilerkanäle einer ersten Eben durch Verteilerzuführkanäle mit den Verteilerkanälen einer weiteren Ebenen verbunden sind. Dies eröffnet die Möglichkeit, dass die Verteilerkanäle einzelner Ebenen selbst dann natürlich balanciert werden, wenn die Anzahl und Anordnung der zu beliefernden Düsenzuführkanäle insgesamt eine numerisch Balancierung des gesamten Systems erforderlich macht. Mithin reduziert sich die Abhängigkeit von den Materialeigenschaften gegenüber einem ausschließlich numerisch balancierten System deutlich.

Insgesamt kann das Verteilerkanalsystem dann neben dem Hauptzuführkanal verschiedene horizontale und vertikale Kanäle umfassen. Die Schmelze wird innerhalb des Verteilers rasch und zuverlässig verteilt, wobei die Ebenen in denen die Verteilerkanäle liegen, durch die Zuführkanäle verbunden werden.

Die Verteilerzuführkanäle und die Düsenzuführkanäle sind dabei vorteilhaft vertikal angeordnet und können sich über mehrere Ebenen erstrecken, wobei die einzelnen Ebenen miteinander verbunden sind. Die Verteilerzuführkanäle können überdies die Verteilerkanäle mehrerer Ebenen mit Material versorgen. Die Düsenzuführöffnungen können die Verteilerkanäle einer oberen oder einer unteren Ebene mit dem Strömungskanal einer Spritzgießdüse verbinden.

Die Verteilerkanäle umfassen Hauptverteilerkanäle, Unterverteilerkanäle und Endverteilerkanäle und sind bevorzugt horizontal angeordnet und über die vertikal verlaufende Verteilerzuführkanäle strömungsverbunden.

Weiterhin ist es zweckmäßig, wenn der Hauptzuführkanal derart angeordnet ist, dass keiner der Düsenzuführkanäle in direkter Linie unterhalb des Hauptzuführkanals angeordnet ist. Alle Düsenzuführkanäle können dann von einem oder mehreren Verteilerkanälen unabhängig vom Hauptzuführkanal beliefert werden. Das System kann daher dadurch balanciert werden, dass die Abmessungen der Verteilerkanäle entsprechend in Bezug auf den Durchmesser und die Länge der Verteilerkanäle angepasst werden. Der Hauptzuführkanal ist bevorzugt vertikal angeordnet, denkbar ist aber auch, dass er aus einem horizontalen Abschnitt und einem vertikalen Abschnitt besteht.

Insbesondere für Ausführungsvarianten mit Nadelverschlussdüsen ist es vorteilhaft, wenn der Hauptzuführkanal außerhalb des Verteilermittelpunktes angeordnet ist. Dadurch können die Verschlussnadeln durch die Düsenzuführkanäle geführt werden, ohne dass es zu einer gegenseitigen Behinderung zwischen der Materialzuführung und dem Betrieb der Verschlussnadeln kommt.

Man erkennt, dass das Vorhandensein mehreren Ebenen dazu dient, die zu verteilende Masse symmetrisch aufzuteilen. Dabei wird die Masse zu verschiedenen Umlenkpunkten gleitet. Die Umlenkpunkte werden durch die Verteilerzuführkanäle gebildet. Verdoppelt sich die Anzahl der Umlenkpunkte bei jedem Ebenenwechsel, so wird die Balancierung des Systems vorteilhaft erleichtert.

Dazu trägt auch bei, wenn die Abstände zwischen den Düsenzuführkanälen und den Verteilerzuführkanälen, welche die in die Düsenzuführkanäle mündenden Verteilerkanäle speisen, stets gleich sind. Die entsprechenden Verteilerkanäle haben dann alle die gleiche Länge und es ist ausreichend, die Durchmesser der Verteilerkanäle entsprechend anzupassen.

In Bezug auf eine möglichst raumsparende Ausführung des Heiß- oder Kaltkanals ist es von Vorteil, wenn die Verteilerkanäle des Verteilerkanalsystems derart angeordnet sind, dass kein Verteilerkanal einer Ebene über und/oder unter dem Verteilerkanal einer anderen Ebene verläuft. Dadurch können die Ebenen derart angeordnet sein, dass sie sogar zum Teil in einander liegen. Da sich die Verteilerkanäle der Ebenen nicht kreuzen, kann die Umlenkung der Masse selbst in diesem Fall ungestört erfolgen. Mithin kann die Verteilerplatte äußerst flach ausgebildet werden.

Bei allen diesen oder weiteren vorteilhaften Ausführungsformen kann der Verteiler von drei Platten, nämlich einer Sockelplatte, einer Zwischenplatte und einer Deckelplatte, gebildet werden. Dies vereinfacht die Herstellung des Verteilers, der insgesamt kostengünstig gefertigt werden kann.

Günstig ist es, wenn jeder Verteilerkanal von zwei dieser Platten begrenzt wird. Dies ermöglicht insbesondere, dass die Verteilerkanäle in zwei oder mehr Ebenen angeordnet sind, ohne dass zusätzliche Verteilerplatten erforderlich sind. So sind einerseits Verteilerkanäle, welche in einer oberen Ebene von der Deckelplatte und der Zwischenplatte begrenzt werden, und andererseits Verteilerkanäle, welche in einer unteren Ebene von der Sockelplatte und der Zwischenplatte begrenzt werden, möglich. Dabei können die Verteilerkanäle beispielsweise derart gestaltet sein, dass eine entsprechende Ausnehmung in der unteren oder oberen Fläche der Zwischenplatte ausgebildet ist, welche durch eine glatte Oberfläche der Deckelplatte bzw. Sockelplatte wie mit einem Deckel dicht abgeschlossen wird. Denkbar ist aber auch, dass die Zwischenplatte an einer oder beiden Oberflächen plan ist und ihrerseits entsprechende Ausnehmungen in der Deckelplatte bzw. Sockelplatte begrenzt. Mithin ist es möglich, den gesamten Verteiler, insbesondere die die Ausnehmungen begrenzenden Platten, extrem flach und raumsparend auszufertigen.

Daneben ermöglich dies eine sehr einfache Einbringung des Verteilerkanalsystems in die Platten des Verteilers. Es ist nämlich ausreichend, die Verteilerzuführkanäle und die Düsenzuführkanäle als Bohrungen durch die Zwischenplatte bzw. die Sockelplatte zu fertigen. Die Verteilerkanäle können ohne Probleme an der Oberfläche der Platten in Form von entsprechenden Verbindungslinien zwischen den verschiedenen Zuführkanälen eingebracht werden, beispielsweise mittels einer Fräse oder durch Erodieren oder durch Ätzen.

Selbstverständlich können die Verteilerkanäle auch als horizontale Stichbohrungen in eine der Platten eingebracht werden. Zur Begrenzung der Verteilerkanäle können die Stichbohrungen im Anschluss an einer bestimmten Position beispielsweise mit Hilfe eines Stopfens oder sonstigen Verschlussmittels versperrt werden.

Zweckmäßig ist es, wenn die Verteilerzuführkanäle derart in der Zwischenplatte ausgebildet sind, dass sie die Verteilerkanäle, die von der Sockelplatte und der Zwischenplatte begrenzt werden, mit den Verteilerkanälen, die von der Deckelplatte und der Zwischenplatte begrenzt werden, verbinden. Außerdem ist es sinnvoll, wenn die Düsenzuführkanäle in dem Sockel und/oder in der Zwischenplatte ausgebildet sind und wenn der Hauptzuführkanal in der Deckeplatte und/oder der Zwischenplatte ausgebildet ist.

Sinnvoll ist es auch, wenn der Sockel, die Zwischenplatte und die Deckelplatte form- und/oder kraftschlüssig miteinander verbindbar sind. So ist beispielsweise vorstellbar, dass die Platten miteinander verschraubt, verlötet oder verschweißt werden.

Eine vorteilhafte Ausführungsform sieht dabei vor, dass der Hauptzuführkanal in einen oder mehrere primäre Verteilerzuführkanäle mündet und/oder dass jeder primäre Verteilerkanal in einen oder mehrere Unterverteilerkanäle mündet und/oder dass jeder Unterverteilerkanal in einen oder mehrere sekundäre Verteilerzuführkanäle mündet und/oder dass jeder sekundäre Verteilerzuführkanal in einen oder mehrere Endverteilerkanäle mündet und/oder dass jeder Endverteilerkanal in einen oder mehrere Düsenzuführkanäle mündet.

Eine besonders vorteilhafte Variante sieht dabei vor, dass der Hauptzuführkanal in einen V-förmigen Verteilerkanal, der von zwei Hauptverteilerkanälen gebildet wird, mündet. Der V-förmige Verteilerkanal ist in einer ersten Ebene angeordnet und mündet in zwei primären Verteilerzuführkanälen. Jeder primäre Verteilerzuführkanal mündet jeweils in einen Unterverteilerkanal, wobei die Unterverteilerkanäle in einer zweiten Ebene angeordnet sind und jeweils in zwei sekundären Verteilerzuführkanälen münden. Bei jedem Unterverteilerkanal sind ein sekundärer Verteilerzuführkanal proximal zum Hauptzuführkanal und der andere sekundäre Verteilerzuführkanal distal zum Hauptzuführkanal angeordnet. Dabei speisen die distal zum Hauptzuführkanal angeordneten sekundären Verteilerzuführkanäle jeweils vier Endverteilerkanäle. Die proximal zum Hauptzuführkanal angeordneten sekundären Verteilerzuführkanäle speisen jeweils drei Endverteilerkanäle. Die Endverteilerkanäle sind wiederum in der ersten Ebene angeordnet und münden in die Düsenzuführkanäle, welche die Spritzgießmasse den jeweiligen Düsen zuführen. Diese Ausführungsform stellt besonders vorteilhaft ein balanciertes Verteilerkanalsystem bereit, bei dem neun Düsen in einer symmetrischen 3x3-Matrix angeordnet sind.

Die erste Ebene eines solchen Verteilerkanalsystems kann beispielsweise zwischen der Deckelplatte und der Zwischenplatte ausgebildet sein, die zweite Ebene kann zwischen der Zwischenplatte und der Sockelplatte ausgebildet sein. Denkbar sind jedoch auch andere Anordnungen.

Der Verteiler kann auch ein Unterverteiler sein. Dies ist beispielsweise vorteilhaft, wenn mehrere Heißkanäle derart gruppiert werden, dass sie gemeinsam ein Bauteil anspritzen. Die Synchronisation der einzelnen Unterverteiler ist dadurch wesentlich erleichtert und kann durch einen übergeordneten Hauptverteiler, welcher an eine Maschinendüse angeschlossen ist, erfolgen.

In einer anderen Ausführungsform kann der Verteiler auch ein Hauptverteiler sein. Dabei münden die Düsenzuführöffnungen in die Hauptzuführöffnungen von weiteren Unterverteilern.

Von Vorteil kann es auch sein, wenn der Verteiler mindestens zwei Zwischenplatten aufweist. Insbesondere können damit auch komplexe Düsenanordnungen realisiert werden, bei denen z.B. n viel größer als m ist oder umgekehrt.

Bei einem erfindungsgemäßen Heiß- oder Kaltkanal mit einem erfindungsgemäßen Verteiler kann jede Spritzgießdüse ein Materialrohr, eine Heizung und einen Schaft haben. Dabei ist es im Sinne einer platzsparenden Bauweise des Werkzeugs vorteilhaft, wenn die Anschlüsse für die Heizung in der Sockelplatte des Verteilers verlaufen. Vorteilhaft ist es weiter, wenn das Materialrohr der Spritzgießdüse direkt in der Sockelplatte festlegbar ist. Mithin kann ein Verrutschen des Materialrohres gegenüber den Düsenzuführkanälen - die sie beispielsweise durch unterschiedliche Wärmeausdehnung des Verteilers und der Spritzgießdüse entstehen könnte - verhindert werden. Mithin ist es ein weiterer Vorteil der Erfindung, dass die Düsenzuführkanäle axial fluchtend in den im Materialrohr der jeweiligen Spritzgießdüse ausgebildeten Strömungskanal münden.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine schematische Darstellung eines Heiß- oder Kaltkanals mit Verteiler,
- Fig. 2: eine schematische Draufsicht auf den Verteiler aus Fig. 1,
- Fig. 3a: einen Querschnitt durch den Verteiler aus Fig. 1 und 2 im Bereich zwischen der Deckelplatte und der Zwischenplatte mit neun Düsenzuführkanälen und
- Fig. 3b: einen Querschnitt durch den Verteiler aus Fig. 1 und 2 im Bereich zwischen der Sockelplatte und der Zwischenplatte

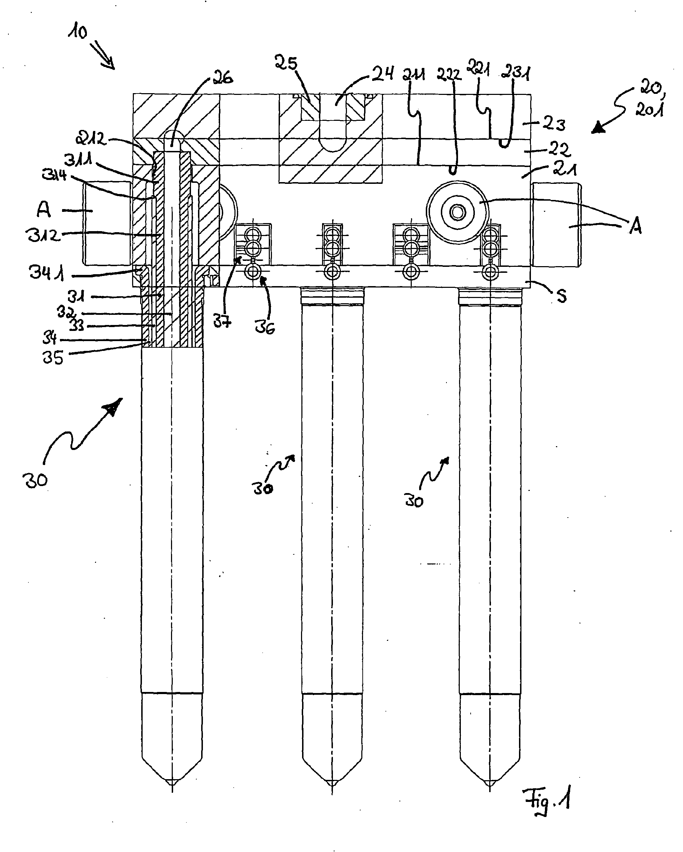

Die Fig. 1 zeigt einen Heiß- oder Kaltkanal 10 mit einem Verteiler 20 und mehreren Spritzgießdüsen 30.

Der Verteiler 20 hat eine Verteilerplatte 201, die aus einer Sockelplatte 21, einer Zwischenplatte 22 und einer Deckelplatte 23 besteht. In der Deckelplatte 23 ist ein Hauptzuführkanal 24 ausgebildet, der einen Durchmesser D1 hat. Im Bereich des Hauptzuführkanals 24 ist ein Anschluss 25 für die (nicht dargestellte) zuleitende Maschinendüse ausgebildet.

Die Spritzgießdüsen 30 bestehen jeweils aus einem Materialrohr 31, in dem ein Strömungskanal 32 eingebracht ist. Der Strömungskanal 32 ist axial fluchtend mit einem Düsenzuführkanal 26 strömungsverbunden, der in der Zwischenplatte 22 des Verteilers 20 ausgebildet ist.

Das Materialrohr 31 hat ein oberes Ende 311, einen mittleren Abschnitt 312 und einen unteren Abschnitt 313. Mit dem oberen Ende 311 ist das Materialrohr 31 in einer Ausnehmung 212 der Sockelplatte 21 des Verteilers festlegbar, z.B. durch Einschrauben oder Einpressen. Im Fall beengter Platzverhältnisse kann die Ausnehmung 212 sich auch teilweise bis in die Zwischenplatte 22 hineinziehen, wie es in dem dargestellten Ausführungsbeispiel der Fall ist. In dem mittleren und unteren Abschnitt 312, 313 wird das Materialrohr 31 von einer Heizung 33 umschlossen.

Die Heizung 33 kann beispielsweise über das Materialrohr 31 schiebbar sein. Sie stützt sich an einem Absatz 314 ab, welcher zwischen dem oberen Ende 311 und dem mittleren Abschnitt 312 des Materialrohres 31 ausgebildet ist. Anschlüsse 36 verbinden jede Heizung 33 mit einer (nicht dargestellten) Regelung. Zur Aufnahme der Anschlüsse 35 sind in der Sockelplatte 21 Kanäle 37 vorgesehen.

Im Bereich des unteren Abschnittes 313 sind die Heizung 33 und das Materialrohr 31 von einem Schaft 34 umschlossen. Der Schaft 34 hat verteilerseitig einen Flansch 341, mit welchem er an der Sockelplatte 21 des Verteilers 20 anliegt. Zwischen der Heizung 33 und dem Schaft 34 ist ein isolierender Luftspalt 35 ausgebildet. Der Schaft 34 wird durch eine Sicherungsplatte S am Verteiler 20 festgehalten. In einer besonders vorteilhaften Ausführungsform besteht die Sicherungsplatte S aus schlecht wärmeleitendem Material, z.B. Titan. Sie dient somit nicht nur der Sicherung sondern auch der thermischen Isolierung des Verteilers 20.

Darüber hinaus zeigt Fig. 1, dass an den Seiten der Sockelplatte 21 Abstandshalter A vorhanden sind. Diese ermöglichen eine gleichmäßige Anordnung mehrerer Verteiler 20 unmittelbar nebeneinander. Die Spritzgießdüsen 30 mehrerer Heiß- oder Kaltkanäle 10 können dadurch zu größeren Gruppen angeordnet werden. Dabei sind die Abstandshalter A insbesondere dann von Vorteil, wenn die Spritzgießdüsen 30 eines Heiß- oder Kaltkanals 10 in einer (n × m)-Matrix angeordnet sind. Die Abstandshalter A stellen sicher, dass die äußeren Spritzgießdüsen 30 benachbarter Heiß- oder Kaltkanäle 10 relativ zueinander den gleichen Abstand haben, wie die Spritzgießdüsen 30 eines Heiß- oder Kaltkanals untereinander.

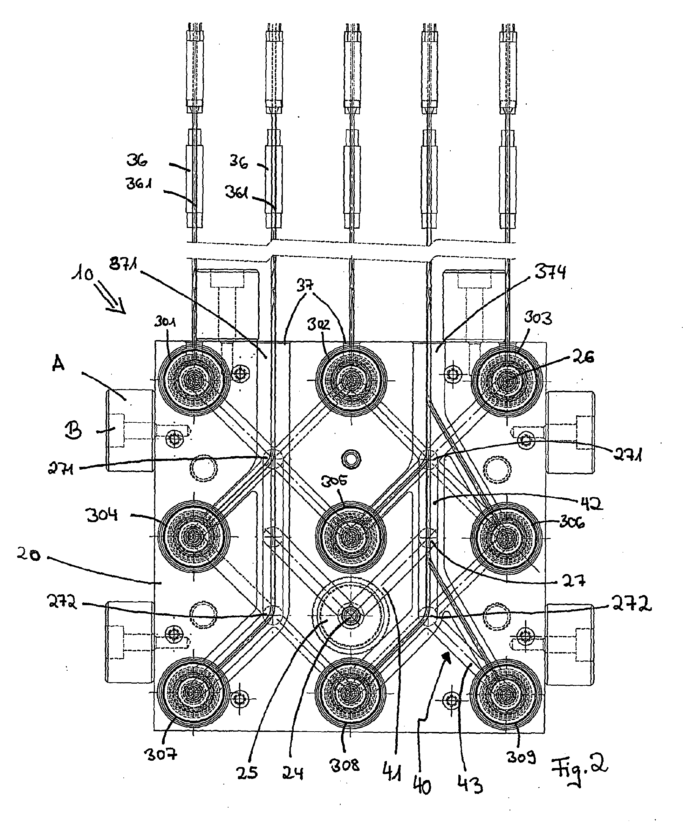

Fig. 2 zeigt, dass an dem Verteiler 20 des Heiß- oder Kaltkanals 10 neun Spritzgießdüsen 30, 301, 302, 303, 304, 305, 306, 307, 308, 309 in einer symmetrischen 3×3-Matrix angeordnet sind.

In dem Verteiler 20 ist ein Verteilerkanalsystem 40 ausgebildet, welches die Spritzgießdüsen 30, 301, 302, 303, 304, 305, 306, 307, 308, 309 mit Schmelze versorgt. Außerdem sind in dem Verteiler 20 mehrer Anschlusskanäle 371, 372, 373, 374 ausgebildet, welche die Leitungen 361 der elektrischen Anschlüsse 36 für die Heizungen 33 der Spritzgießdüsen 30, 301, 302, 303, 304, 305, 306, 307, 308, 309 führen, und ein Anschlusskanalsystem 37 bilden. An den Seiten des Verteilers 20 sind Abstandshalter A mit Hilfe von Befestigungselementen B montiert, bei denen es sich beispielsweise um Schrauben handeln kann.

Das Anschlusskanalsystem 37 hat zur Versorgung der vorderen drei Spritzgießdüsen 301, 302, 303 relativ kurze Stichkanäle 372, welche direkt der Versorgung der einzelnen Düse dienen. Die mittleren drei Spritzgießdüsen 304, 305, 306 und die hinteren drei Spritzgießdüsen 307, 308, 309 werden über zwei Anschlusshauptkanäle 371, 374 versorgt, von denen weitere Anschlussseitenkanäle 373 abzweigen. Dabei bedient der eine Anschlusshauptkanal 371 zwei hintereinander liegende Düsen 304, 307 und der andere Anschlusshauptkanal 374 vier hintereinander liegende Düsen 305, 306, 308, 309.

Man erkennt, dass alle Anschlüsse 36 auf einer gemeinsamen Seite des Verteilers 20 in das Anschlusskanalsystem 37 geführt werden. Dies ist insbesondere von Vorteil, wenn mehrere Verteiler 20 nebeneinander angeordnet werden sollen.

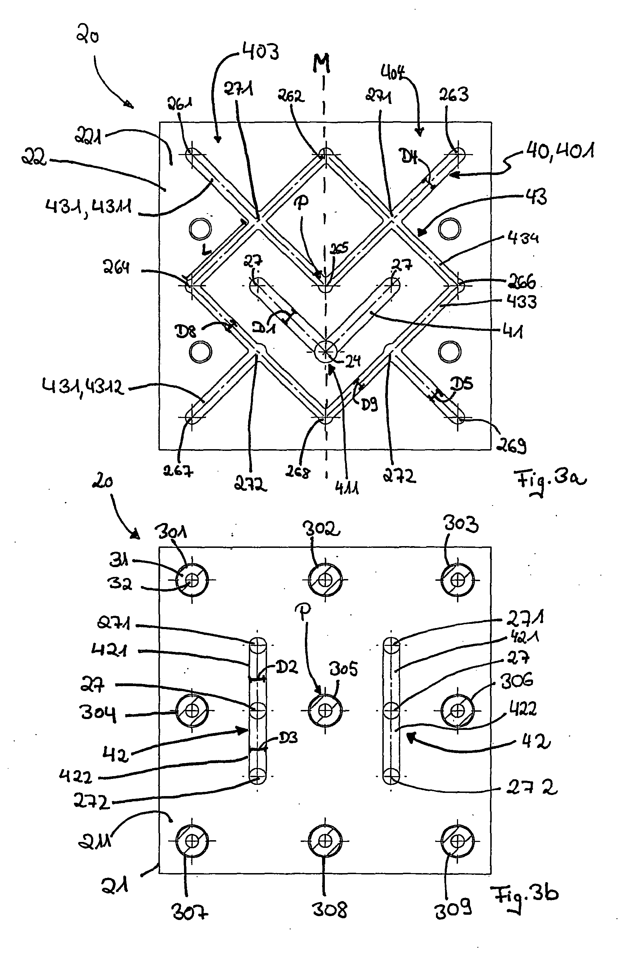

Das Verteilerkanalsystem 40 besteht aus verschiedenen Verteilerkanälen 41, 42, 43, dem Hauptzuführkanal 24, mehreren Verteilerzuführkanälen 27, 271, 272 und den Düsenzuführkanälen 26. Der Hauptzuführkanal 24 mündet in zwei V-förmig angeordnete Hauptverteilerkanäle 41. Diese münden in zwei primäre Verteilerzuführkanäle 27, welche die Schmelze in zwei Unterverteilerkanäle 42 leiten. Diese Unterverteilerkanäle 42 münden wiederum jeweils in einen entfernt (distal) zum Hauptzuführkanal 24 gelegenen Verteilerzuführkanal 271 und in einen nahe (proximal) zum Hauptzuführkanal 24 gelegenen Verteilerzuführkanal 272. Die distalen Verteilerzuführkanäle 271 leiten die Schmelze in jeweils vier Düsenzuführkanäle 43. Die proximalen Verteilerzuführkanäle 272 leiten die Schmelze in jeweils drei Endverteilerkanäle 43. Alle Endverteilerkanäle 43 münden jeweils in einen Düsenzuführkanal 26, der mit dem Strömungskanal 32 einer Spritzgießdüse 30 strömungsverbunden ist. Ein detaillierter Aufbau des Verteilerkanalsystems 40 ist den Fig. 3a und 3b zu entnehmen.

Man erkennt in Fig. 3a und 3b, dass das Verteilerkanalsystem 40 aus einer oberen Ebene 401 und einer unteren Ebene 402 besteht. Dabei werden die Verteilerkanäle 41, 43, die in der oberen Ebene 401 angeordnet sind, durch Ausnehmungen in der Oberseite 221 der Zwischenplatte 22 gebildet. Die Verteilerkanäle 42, die in der unteren Ebene 402 angeordnet sind, werden durch Ausnehmungen in der Oberseite 211 der Sockelplatte 21 gebildet.

Die Fig. 3a zeigt, dass der Hauptzuführkanal 24 in die Spitze 411 eines V-förmigen Verteilerkanals, der aus zwei Hauptverteilerkanälen 41 gebildet wird, mündet. Diese Hauptverteilerkanäle 41 liegen in der oberen Ebene 401 und münden jeweils in einen primären Verteilerzuführkanal 27. Das Verteilerkanalsystem 40 wird dadurch in zwei zu einander symmetrische Hauptäste 403, 404, einen rechten Hauptast 403 und einen linken Hauptast 404, aufgeteilt. Der Hauptzuführkanal 24 liegt dabei auf der Spiegelachse M des Verteilers 20 zwischen den beiden Ästen 403, 404. Er ist in einer Linie mit den Düsenzuführkanälen 262, 265, 268 angeordnet, liegt jedoch außerhalb des Mittelpunktes P des Verteilers 20, welcher sich genau über dem mittleren Düsenzuführkanal 265 befindet. Mithin sind alle Düsenzuführkanäle 26 derart angeordnet, dass durch sie Verschlussnadeln für die Spritzgießdüsen 30 geführt werden können.

Beide Hauptverteilerkanäle 41 haben den gleichen Durchmesser D1. Außerdem haben die Verteilerzuführkanäle 27 beide den gleichen Abstand vom Hauptzuführkanal 24. Die Hauptverteilerkanäle sind also natürlich balanciert. Mithin werden auch beide Hauptäste 403, 404 des Verteilerkanalsystems 40 in der gleichen Zeit mit der gleichen Menge Schmelze gleichen Zustandes unter gleichem Druck beliefert.

Jeder primäre Verteilerzuführkanal 27 verbindet einen in der oberen Ebene 401 gelegenen Hauptverteilerkanal 41 mit einem in der unteren Ebene 402 gelegenen und in Fig. 3b dargestellten Unterverteilerkanal 42. Dabei mündet der primäre Verteilerzuführkanal 27 genau in der Mitte des Unterverteilerkanals 42, so dass dieser in zwei gleichlange Abschnitte 421, 422 unterteilt wird. Der eine Abschnitt 421 führt dabei zu einem distal zum Hauptzuführkanal 24 gelegenen sekundären Verteilerzuführkanal 271. Der andere Abschnitt 422 führt zu einem proximal zum Hauptzuführkanal 24 gelegenen sekundären Verteilerzuführkanal 272. Die sekundären Verteilerzuführkanäle 271, 272 führen die Schmelze wieder zurück in die obere Ebene 401 des Verteilerkanalsystems 40. Weil die Unterverteilerkanäle 42 die gleiche Länge und den gleichen Durchmesser haben, ist auch die untere Ebene 402 des Verteilerkanalsystems 40 natürlich balanciert.

Man erkennt in Fig. 3a, dass die distalen, sekundären Verteilerzuführkanäle 271 jeweils vier in Düsenzuführkanäle 26 mündende Endverteilerkanäle 43 speisen. Die proximalen, sekundären Verteilerkanäle 272 speisen jeweils drei solcher Endverteilerkanäle 43.

Man erkennt ebenfalls in Fig. 3a, dass die in den Ecken der Matrix liegenden Düsenzuführkanäle 261, 263, 267, 269 jeweils von einem einzelnen Endverteilerkanal 431 gespeist werden. Die in den Seitenmitten liegenden Düsenzuführkanäle 262, 264, 266, 268 und der mittlere Düsenzuführkanal 265 werden dagegen jeweils von zwei Endverteilerkanälen 432, 433, 434, 435, 436 gespeist. Mithin unterscheiden sich die Düsenzuführkanäle 26 zunächst darin von einander, dass sie entweder von einem oder von zwei Verteilerkanälen 43 beliefert werden.

Ein weiteres Unterscheidungsmerkmal für die Düsenzuführkanäle 26 ist, dass die sie beliefernden Endverteilerkanäle 43 entweder von einem vierfach verteilenden Verteilerzuführkanal 271 oder von einem dreifach verteilenden Verteilerzuführkanal 272 beliefert werden. So werden die Endverteilerkanäle 4311, 436, 435, welche die Düsenzuführkanäle 261, 262, 263, 265 beliefern, von einer vierfach Verteilerzuführkanal 271 gespeist. Die Endverteilerkanäle 4312, 432, welche die Düsenzuführkanäle 267, 268, 269 beliefern, werden von einer dreifach Verteilerzuführkanal 272 gespeist. Die Düsenzuführkanäle 264, 266 werden jeweils von einem Endverteilerkanal 433, der durch eine dreifach Verteilerzuführkanal 272 gespeist wird, und von einem Endverteilerkanal 434, der durch eine vierfach Verteilerzuführkanal 271 gespeist wird, beliefert.

Alle Endverteilerkanäle 43, 431, 432, 433, 434, 435, 436 haben die gleiche Länge L. Die Durchmesser D4, D5, D6, D7, D8, D9 der Verteilerkanäle 43, 431, 432, 433, 434, 435, 436 sind jedoch derart angepasst, dass alle Düsenzuführkanäle 26, 261, 262, 263, 264, 265, 266, 267, 268, 269 gleichmäßig mit Schmelze versorgt werden. Insbesondere sind dabei die Durchmesser D4, D5, der einzeln zuliefernden Endverteilerkanäle 431, 4311, 4312 größer als die Durchmesser D6, D7, D8, D9 der Endverteilerkanäle 432, 433, 434, 435, 436, welche jeweils zu zweit eine Düsenzuführkanal 26, 262, 264, 265, 266, 268 bedienen.

Außerdem können die Durchmesser der Enverteilerkanäle 4311, 436, 435, 434, welche von den vierfach liefernden Verteilerzuführkanälen 271 bedient werden, mit den Durchmessern der Endverteilerkanäle 4312, 433, 432, welche von den dreifach liefernden Verteilerzuführkanälen 272 bedient werden, zur Balancierung des Systems abgestimmt werden.

Weiterhin erkennt man in den Fig. 3a und 3b, dass die in der Zwischenplatte 22 angeordneten Düsenzuführkanäle 26, 261, 262, 263, 264, 265, 266, 267, 268, 269 derart fluchtend über den in der Sockeplatte 21 angeordneten Materialrohren 32 der Spritzgießdüsen 30, 301, 302, 303, 304, 305, 306, 307, 308, 309 angeordnet sind, dass sie die Schmelze unmittelbar in die Schmelzekanäle 32 der Spritzgießdüsen 30, 301, 302, 303, 304, 305, 306, 307, 308, 309 einleiten.

Insgesamt werden durch den erfindungsgemäßen Verteiler alle neun in der 3x3-Matrix angeordneten Spritzgießdüsen 30, 301, 302, 303, 304, 305, 306, 307, 308, 309 gleichzeitig mit Schmelze gleichen Zustandes unter gleichem Druck in gleicher Menge beliefert. Der Verteiler 20 ist damit trotz ungerader Anzahl der Düsen 30 und deren Anordnung auf engstem Raum balanciert.

Die Erfindung ist nicht auf eine der vorbeschriebenen Ausführungsformen beschränkt, sondern in vielfältiger Weise abwandelbar.

So können die Verteilerkanäle 41, 42, 43 in der Deckelplatte 23, der Sockelplatte 21 oder der Zwischenplatte 22 ausgebildet sein.

Sämtliche Kanäle 41, 42, 43, 24, 27, 26 können durch Bohren, Fräsen, Ätzen oder Erodieren ausgebildet werden.

Die Hauptverteilerkanäle 41, die Unterverteilerkanäle 42 und die Endverteilerkanäle 43 können jeweils in der oberen Ebene 401 und/oder in der unteren Ebene 402 ausgebildet sein. Sie können dabei horizontal, vertikal und/oder schräg innerhalb und/oder zwischen den Ebenen 401, 402 verlaufen. Auch der Hauptzuführkanal 24, die Verteilerzuführkanäle 27, 271, 272 und/oder die Düsenzuführkanäle 26 können horizontal, vertikal und/oder schräg innerhalb und/oder zwischen den Ebenen 401, 402 verlaufen.

Die Abstände zwischen benachbarten Düsen 30 können unterschiedlich sein. Dies kann beispielsweise von Vorteil sein, wenn mehrere Heißkanäle miteinander zu einer größeren Gruppe angeordnet werden.

Wenn die Abstände zwischen den Düsen 30 unterschiedlich sind, könne die Endverteilerkanäle 43, 431, 432, 433, 434, 435, 436 unterschiedliche Längen haben. Dann kann es von Vorteile sein, wenn sie gleiche Durchmesser D4, D5, D6, D7, D8, D9 haben, um das System zu balancieren.

Das Verteilerkanalsystem 40 kann auch mehr als zwei Ebenen 401, 402 umfassen. Dabei ist denkbar, dass die vertikal und/oder schräg zwischen den Ebenen verlaufenden Verteilerkanäle 41, 42, 43 und/oder Zuführkanäle 24, 26, 27, 271, 272 eine oder mehrere Ebenen durchlaufen.

Sofern die Düsenzuführöffnungen 265 nicht mittels Verschlussnadeln verschlossen werden, kann der Hauptzuführkanal 24 auch in einer ersten Ebene 401 mittig oberhalb der mittleren Düsenzuführöffnung 265 angeordnet sein und zwei Hauptverteilerkanäle 41 speisen. Dabei ist es vorstellbar, dass die Unterverteilerkanäle 42 und die Endverteilerkanäle 43 in einer gemeinsamen zweiten Ebene 402 liegen. Die Hauptverteilerkanäle 41 sind V-förmig angeordnet und verlaufen derart diagonal zwischen der ersten und der zweiten Ebene 401, 402, dass sie den Hauptzuführkanal 24 direkt mit jeweils einem Unterverteilerkanal 42 verbinden. Sie münden dabei beispielsweise in der Mitte der Unterverteilerkanäle 42. Die Unterverteilerkanäle 42 münden wiederum in insgesamt vier Verteilerzuführkanäle 271, 272. Diese können dann wiederum mehrere, beispielsweise drei oder vier, Endverteilerkanäle 43 welche in der gleichen Ebene wie die Unterverteilerkanäle 42 oder in einer weiteren Ebene angeordnet sind speisen.

Vorstellbar ist auch, dass der Hauptzuführkanal 24 in einen einzigen linearen Hauptverteilerkanals 41 mündet, beispielsweise in dessen Mitte. Dieser endet wiederum an zwei primären Verteilerzuführkanälen 27. Diese zwei primären Verteilerzuführkanäle 27 leiten die Schmelze jeweils in einen gewinkelten und sich am Ende verzweigenden Unterverteilerkanal 42. An den Enden der Unterverteilerkanäle sind wiederum die proximalen und distalen sekundären Verteilerzuführkanäle 271, 272 ausgebildet. Diese speisen jeweils vier Endverteilerkanäle 43. Dadurch ist es möglich den mittleren Düsenzuführkanal 265 durch vier Endverteilerkanäle 435 zu beliefern. Dies führt zu einer besonders einfachen numerischen Balancierung der Ebene, in der die Endverteilerkanäle 435 ausgebildet sind.

Weiter ist es denkbar, dass die Haupt- und Unterverteilerkanäle 41, 42 gemeinsam mit den Endverteilerkanälen 43, 431, 432, 433, 434, 435, 436 in einer Eben liegen. Dabei können mehrere Hauptverteilerkanäle 41 vorgesehen sein, die beispielsweise direkt in die Unterverteileröffnungen 271, 272 münden. Auch ist es vorstellbar, dass der oder die Hauptverteilerkanäle 41 in gekrümmte Unterverteilerkanäle 42 münden. Auch die Hauptverteilerkanäle 41 und die Endverteilerkanäle 43, 431, 432, 433, 434, 435, 436 können gekrümmt sein. Dies ist insbesondere dann vorteilhaft möglich, wenn die Kanäle durch Frästechnik auf der Ober- und/oder Unterfläche einer der Verteilerplatten ausgebildet werden.

Auch ist es möglich, dass die Abschnitte 421, 422 der Unterverteilerkanäle 42 mit unterschiedlichen Durchmessern D2, D3 ausgebildet werden. Dies ist von Vorteil, wenn ausgeglichen werden soll, dass die sekundären Verteilerzuführkanäle 271, 272 unterschiedlich viele Endverteilerkanäle 43 beliefern.

Der Verteiler 20 kann beheizt werden. Dazu kann beispielsweise ein an- oder eingeschweißter, durch löten befestigter oder in eine Nut eingepresster Rohrheizkörper, eine direkt aufgebrachte oder als separates Bauteil befestigte Dickschichtheizung oder ähnliches dienen.

Die Anschlüsse 36 können auch auf unterschiedlichen Seiten des Verteilers in das Anschlusskanalsystem 37 geführt werden.

Bei den Spritzgießdüsen 30 kann es sich sowohl um eine Heiß- oder Kaltkanal- als auch um eine Kaltkanaldüse handeln. Weiter können die Spritzgießdüsen sowohl Nadelverschlussdüsen, Düsen mit einem offenen Anguss oder Düsen mit einer Düsenspitze sein.

Weiterhin kann der Flansch 341 mit Haltemitteln zur Befestigung des Schaftes 34 ausgestattet sein. So können beispielsweise Bohrungen zur Aufnahme von Schrauben oder anderen Befestigungsmitteln vorgesehen sein.

Man erkennt, dass bei einem Verteiler 20 für einen Heiß- oder Kaltkanal 10, mit einer Verteilerplatte 201, die einen Hauptzuführkanal 24 für eine fließfähige Masse aufweist und in der ein Verteilerkanalsystem 40 mit Verteilerkanälen 41, 42, 43 ausgebildet ist, das über Düsenzuführkanäle 26 mit den Strömungskanälen 32 von an der Verteilerplatte 201 angeschlossenen Spritzgießdüsen 30 strömungsverbunden ist, innerhalb der Verteilerplatte 201 Verteilerzuführkanäle 27, 271, 272 ausgebildet sind. Dabei ist jeder Verteilerkanal 41, 42, 43 mit dem Hauptzuführkanal 24 und/oder mindestens einem Verteilerzuführkanal 27, 271, 272 strömungsverbunden, wobei jeder Verteilerkanal 41, 42, 43 in mindestens einen Verteilerzuführkanal 27, 271, 272 und/oder in mindestens einen Düsenzuführkanal 26 mündet und wobei jeder Verteilerzuführkanal 27, 271, 272 in einen weiteren Verteilerkanal 41, 42, 43 und jeder Düsenzuführkanal 26 in den Strömungskanal 32 einer jeweils zugeordneten Spritzgießdüse 30 mündet. Die Verteilerkanäle 41, 42, 43, die Verteilerzuführkanäle 27, 271, 272 und/oder die Düsenzuführkanäle 26 sind derart bemessen, dass das Verteilerkanalsystem 40 balanciert ist.

Dabei können die Düsenzuführkanäle 26 in einer (n × m)-Matrix angeordnet sein mit n = m oder n ≠ m und n ≥ 3. Die Verteilerkanäle 41, 42 43 können in einer Ebene ausgebildet und horizontal ausgerichtet sein. Die Verteilerzuführkanäle 27, 271, 272, die Düsenzuführkanäle 26 und der Hauptzuführkanal 24 können vertikal ausgerichtet sein. Der Hauptzuführkanal 24 ist derart angeordnet, dass keiner der Düsenzuführkanäle 26 in direkter Linie unterhalb des Hauptzuführkanals 24 angeordnet ist.

Das Verteilerkanalsystem 40 kann sich über mindestens zwei Ebenen 401, 402 erstrecken wobei in jeder Ebene 401, 402 Verteilerkanäle 41, 42, 43 ausgebildet sind, wobei die Verteilerkanäle 41, 42, 43 einer ersten Ebene 401, 402 durch Verteilerzuführkanäle 27, 271, 272 mit den Verteilerkanälen 41, 42, 43 einer weiteren Ebenen 401, 402 verbunden sind. Außerdem sind die Verteilerkanäle 41, 42, 43 innerhalb der Ebenen 401, 402 derart angeordnet, dass kein Verteilerkanal 41, 42, 43 einer Ebene 401, 402 über und/oder unter dem Verteilerkanal 41, 42, 43 einer anderen Ebene 401, 402 verläuft. Daneben sind die Abstände L zwischen den Düsenzuführkanälen 26 und den Verteilerzuführkanälen 27, 271, 272, welche die in die Düsenzuführkanäle 26 mündenden Verteilerkanäle 43 speisen, stets gleich.

Die Verteilerplatte 201 kann eine Sockelplatte 21, eine Zwischenplatte 22 und eine Deckelplatte 23 aufweisen, wobei jeder Verteilerkanal 41, 42, 43 von zwei Platten 21, 22, 23 des Verteilers 20 begrenzt wird. Die Verteilerzuführkanäle 27, 271, 272 sind in der Zwischenplatte 22 ausgebildet, die Düsenzuführkanäle 26 in dem Sockel 21 und/oder in der Zwischenplatte 22 und der Hauptzuführkanal 24 in der Deckelplatte 23 und/oder in der Zwischenplatte 22.

Man erkennt weiter, dass der Hauptzuführkanal 24 in einen oder mehrere Hauptverteilerkanäle 41 mündet und/oder dass die Hauptverteilerkanäle 41 in einen oder mehrere primäre Verteilerzuführkanäle 27 münden und/oder dass jeder primäre Verteilerzuführkanal 27 in einen oder mehrere Unterverteilerkanäle 42 mündet und/oder dass jeder Unterverteilerkanal 42 in einen oder mehrere sekundäre Verteilerzuführkanäle 271, 272 münden und/oder dass jeder sekundäre Verteilerzuführkanal 271, 272 in einen oder mehrere Endverteilerkanäle 43 mündet und/oder dass jeder Endverteilerkanal 43 in einen oder mehrere Düsenzuführkanäle 26 mündet.

Dabei kann der Hauptzuführkanal 24 in einen V-förmigen Verteilerkanal münden, der von zwei Hauptverteilerkanälen 41 gebildet ist und in einer ersten Ebene 401, 402 angeordnet ist wobei der V-förmige Verteilerkanal in zwei primäre Verteilerzuführkanäle 27 mündet. Jeder primäre Verteilerzuführkanal 27 mündet jeweils in einen Unterverteilerkanal 42, wobei die Unterverteilerkanäle 42 in einer zweiten Ebene 401, 402 angeordnet sind und in jeweils zwei sekundären Verteilerzuführkanälen 271, 272 münden. Bei jedem Unterverteilerkanal 42 ist ein sekundärer Verteilerzuführkanal 272 proximal zum Hauptzuführkanal 24 und ein anderer sekundärer Verteilerzuführkanal 271 distal zum Hauptzuführkanal 24 angeordnet. Dabei speisen die distal zum Hauptzuführkanal 24 angeordneten sekundären Verteilerzuführkanäle 271 jeweils vier Endverteilerkanäle 43 und die proximal zum Hauptzuführkanal 24 angeordneten sekundären Verteilerzuführkanäle 272 jeweils drei Endverteilerkanäle 43. Die Endverteilerkanäle 43 sind in der ersten Ebene 401, 402 angeordnet.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| A | Abstandshalter | 264 | seitenmittiger Düsenzuführkanal |
| B | Befestigungselement | 265 | mittlerer Düsenzuführkanal |
| D1 | Durchmesser | 266 | seitenmittiger Düsenzuführkanal |
| D2 | Durchmesser | 267 | eckseitiger Düsenzuführkanal |
| D3 | Durchmesser | 268 | seitenmittiger Düsenzuführkanal |
| D4 | Durchmesser | 269 | eckseitiger Düsenzuführkanal |
| D5 | Durchmesser | | |
| D6 | Durchmesser | 27 | Verteilerzuführkanal |
| D7 | Durchmesser | 271 | sekundärer Verteilerzuführkanal |
| D8 | Durchmesser | 272 | sekundärer Verteilerzuführkanal |
| D9 | Durchmesser | | |
| L | Abstand | 30 | Spritzgießdüse |
| M | Spiegelachse | 301 | vordere Spritzgießdüse |
| P | Mittelpunkt | 302 | vordere Spritzgießdüse |
| S | Sicherungsplatte | 303 | vordere Spritzgießdüse |
| | | 304 | mittlere Spritzgießdüse |
| 10 | Heiß- oder Kaltkanal | 305 | mittlere Spritzgießdüse |
| 20 | Verteiler | 306 | mittlere Spritzgießdüse |
| 201 | Verteilerplatte | 307 | hintere Spritzgießdüse |
| 21 | Sockelplatte | 308 | hintere Spritzgießdüse |
| 212 | Aussparung | 309 | hintere Spritzgießdüse |
| 211 | Oberseite der Sockelplatte | | |
| 22 | Zwischenplatte | 31 | Materialrohr |
| 221 | Oberseite der Zwischenplatte | 311 | Oberes Ende |
| 222 | Unterseite der Zwischenplatte | 312 | mittlerer Abschnitt |
| 23 | Deckelplatte | 313 | unterer Abschnitt |
| 231 | Unterseite der Deckelplatte | 314 | Absatz |
| 24 | Hauptzuführkanal | 32 | Strömungskanal |
| 25 | Anschlussstück | 33 | Heizung |
| 26 | Düsenzuführkanal | 34 | Schaft |
| 261 | eckseitiger Düsenzuführkanal | 341 | Flansch |
| 262 | seitenmittiger Düsenzuführkanal | 35 | Luftspalt |
| 263 | eckseitiger Düsenzuführkanal | 36 | Anschluss |
| 361 | Leitung | 4311 | Endverteilerkanal |
| 37 | Anschlusskanal | 4312 | Endverteilerkanal |
| 371 | Anschlusshauptkanal | 432 | Endverteilerkanal |
| 372 | Stichkanal | 433 | Endverteilerkanal |
| 373 | Anschlussseitenkanal | 434 | Endverteilerkanal |
| 374 | Anschlusshauptkanal | 435 | Endverteilerkanal |
| | | 436 | Endverteilerkanal |
| 40 | Verteilerkanalsystem | 401 | obere Ebene |
| 41 | Hauptverteilerkanal | 402 | untere Ebene |
| 411 | Spitze | 403 | Hauptast |
| 42 | Unterverteilerkanal | 404 | Hauptast |
| 421 | Abschnitt | | |
| 422 | Abschnitt | | |
| 43 | Endverteilerkanal | | |
| 431 | Endverteilerkanal | | |

## Patentansprüche

1. Verteiler (20) für einen Heiß- oder Kaltkanal (10), mit einer Verteilerplatte (201), die einen Hauptzuführkanal (24) für eine fließfähige Masse aufweist und in der ein Verteilerkanalsystem (40) mit Verteilerkanälen (41, 42, 43) ausgebildet ist, das über Düsenzuführkanäle (26) mit Strömungskanälen (32) von an der Verteilerplatte (201) angeschlossenen Spritzgießdüsen (30) strömungsverbunden ist, **dadurch gekennzeichnet,**
■ **dass** innerhalb der Verteilerplatte (201) Verteilerzuführkanäle (27, 271, 272) ausgebildet sind,
■ wobei jeder Verteilerkanal (41, 42, 43) mit dem Hauptzuführkanal (24) oder einem Verteilerzuführkanal (27, 271, 272) strömungsverbunden ist,
■ wobei jeder Verteilerkanal (41, 42, 43) in mindestens einen Verteilerzuführkanal (27, 271, 272) und/oder in mindestens einen Düsenzuführkanal (26) mündet, und
■ wobei jeder Verteilerzuführkanal (27, 271, 272) in einen weiteren Verteilerkanal (41, 42, 43) und jeder Düsenzuführkanal (26) in den Strömungskanal (32) einer jeweils zugeordneten Spritzgießdüse (30) mündet, und
■ **dass** die Verteilerkanäle (41, 42, 43), die Verteilerzuführkanäle (27, 271, 272) und/oder die Düsenzuführkanäle (26) derart bemessen sind, dass das Verteilerkanalsystem (40) balanciert ist.

2. Verteiler nach Anspruch 1, **dadurch gekennzeichnet, dass** die Düsenzuführkanäle (26) in einer (n × m)-Matrix angeordnet sind, wobei n = m oder n ≠ m ist und wobei n ≥ 3 ist.

3. Verteiler nach Anspruch 1 oder 2, **dadurch gekennzeichnet, dass** alle Verteilerkanäle (41, 42, 43) in einer Ebene ausgebildet sind.

4. Verteiler (20) nach Anspruch 1 oder 2, **dadurch gekennzeichnet, dass** das Verteilerkanalsystem (40) sich über mindestens zwei Ebenen (401, 402) erstreckt und dass in jeder Ebene (401, 402) Verteilerkanäle (41, 42, 43) ausgebildet sind, wobei die Verteilerkanäle (41, 42, 43) einer ersten Ebene (401, 402) durch Verteilerzuführkanäle (27, 271, 272) mit den Verteilerkanälen (41, 42, 43) einer weiteren Ebenen (401, 402) verbunden sind.

5. Verteiler nach Anspruch 4, **dadurch gekennzeichnet, dass** die Verteilerkanäle (41, 42, 43) innerhalb der Ebenen (401, 402) derart angeordnet sind, dass kein Verteilerkanal (41, 42, 43) einer Ebene (401, 402) über und/oder unter dem Verteilerkanal (41, 42, 43) einer anderen Ebene (401, 402) verläuft.

6. Verteiler nach einem der Ansprüche 1 bis 5, **dadurch gekennzeichnet, dass** der Hauptzuführkanal (24) derart außerhalb des Verteilermittelpunktes (P) angeordnet ist, dass keiner der Düsenzuführkanäle (26) in direkter Linie unterhalb des Hauptzuführkanals (24) angeordnet ist.

7. Verteiler nach einem der Ansprüche 1 bis 6, **dadurch gekennzeichnet, dass** die Abstände (L) zwischen den Düsenzuführkanälen (26) und den Verteilerzuführkanälen (27, 271, 272), welche die in die Düsenzuführkanäle (26) mündenden Verteilerkanäle (43) speisen, stets gleich sind.

8. Verteiler nach einem der Ansprüche 1 bis 7, **dadurch gekennzeichnet, dass** die Verteilerplatte (201) eine Sockelplatte (21), eine Zwischenplatte (22) und eine Deckelplatte (23) aufweist.

9. Verteiler nach einem der Ansprüche 1 bis 8, **dadurch gekennzeichnet,**
■ **dass** der Hauptzuführkanal (24) in einen oder mehrere Hauptverteilerkanäle (41) mündet und/oder
■ **dass** die Hauptverteilerkanäle (41) in einen oder mehrere primäre Verteilerzuführkanäle (27) münden und/oder
■ **dass** jeder primäre Verteilerzuführkanal (27) in einen oder mehrere Unterverteilerkanäle (42) mündet und/oder
■ **dass** jeder Unterverteilerkanal (42) in einen oder mehrere sekundäre Verteilerzuführkanäle (271, 272) münden und/oder
■ **dass** jeder sekundäre Verteilerzuführkanal (271, 272) in einen oder mehrere Endverteilerkanäle (43) mündet und/oder
■ **dass** jeder Endverteilerkanal (43) in einen oder mehrere Düsenzuführkanäle (26) mündet.

10. Verteiler nach Anspruch 9, **dadurch gekennzeichnet,**
■ **dass** der Hauptzuführkanal (24) in einen V-förmigen Verteilerkanal mündet, der von zwei Hauptverteilerkanälen (41) gebildet ist und in einer ersten Ebene (401, 402) angeordnet ist,
■ **dass** der V-förmige Verteilerkanal in zwei primäre Verteilerzuführkanäle (27) mündet, und
■ **dass** jeder primäre Verteilerzuführkanal (27) jeweils in einen Unterverteilerkanal (42) mündet, wobei die Unterverteilerkanäle (42) in einer zweiten Ebene (401, 402) angeordnet sind und in jeweils zwei sekundären Verteilerzuführkanälen (271, 272) münden.

11. Verteiler nach Anspruch 10, **dadurch gekennzeichnet, dass** bei jedem Unterverteilerkanal (42) ein sekundärer Verteilerzuführkanal (272) proximal zum Hauptzuführkanal (24) und ein anderer sekundärer Verteilerzuführkanal (271) distal zum Hauptzuführkanal (24) angeordnet ist.

12. Verteiler nach Anspruch 11, **dadurch gekennzeichnet, dass** die distal zum Hauptzuführkanal (24) angeordneten sekundären Verteilerzuführkanäle (271) jeweils vier Endverteilerkanäle (43) und dass die proximal zum Hauptzuführkanal (24) angeordneten sekundären Verteilerzuführkanäle (272) jeweils drei Endverteilerkanäle (43) speisen, wobei die Endverteilerkanäle (43) in der ersten Ebene (401, 402) angeordnet sind.

13. Verteiler (20) nach einem der Ansprüche 1 bis 12, **dadurch gekennzeichnet, dass** der Verteiler (20) ein Unterverteiler ist.

14. Verteiler (20) nach einem der Ansprüche 1 bis 13, **dadurch gekennzeichnet, dass** der Verteiler (20) ein Hauptverteiler ist und jede Düsenzuführöffnung (26) in die Zuführöffnung eines Unterverteilers mündet.

15. Heiß- oder Kaltkanal (10) mit einem Verteiler (20) nach einem der Ansprüche 1 bis 14.
